# EUROPEAN PATENT SPECIFICATION

(11) **EP 2 253 582 B1**
(45) Date of publication and mention of the grant of the patent: **02.01.2013**
(21) Application number: 09160550.1
(22) Date of filing: 18.05.2009
(51) Int. Cl.: B67D 7/40

(54) **Fuel dispensing unit and method for magnetically handling a hose**
Brennstoffausgabeeinheit und Verfahren zur magnetischen Handhabung eines Schlauchs
Unité de distribution de carburant et procédé de manipulation magnétique d'un tuyau

(43) Date of publication of application: 24.11.2010
(73) Proprietor: Dresser Wayne AB, 202 15 Malmö (SE)
(72) Inventor: Larsson, Bengt I., 274 53 Skivarp (SE)
(74) Representative: Stenbäck, Maria Elisabeth

(56) References cited:
- EP-A- 0 255 979
- EP-A- 1 666 407
- GB-A- 2 234 311
- US-A- 2 702 683

## Description

### Technical field

The present invention relates to a fuel dispensing unit for refueling vehicles, comprising at least one hose. The invention also relates to a method for handling at least one hose at a fuel dispensing unit.

### Background art

A fuel dispensing unit, such as a fuel pump typically comprises a pump part standing on the ground, a display part positioned above the pump part and showing the chosen type of fuel, cash readout, volume readout etc., and a column to which one or more fuel hoses are connected.

When the tank of a vehicle is to be filled up, the driver parks the vehicle beside the fuel pump and opens the cover or cap of the fuel tank. The driver then selects the desired type of fuel and places the pump nozzle in the inlet of the vehicle's fuel tank and dispenses the desired volume of fuel.

To make the hose easy to move but still avoid it to touch the ground, it is common that the dispensing hose hangs from the dispenser column top part. The hose either starts at a connection in the dispenser top part or is possible to pull out through an opening in the column top part and is foldable stored and connected inside the column. The later solution is disclosed e.g. in EP 1 666 407 A1. Modern fuel dispensers are able to dispense multiple fuel types, and are for that reason equipped with multiple hoses, as in the cited document.

Hoses hanging from an elevated position run a risk of entangling themselves in each other. This can occur due to that the hose is randomly twisted by a user or that the fluid pressure twist the hose when it has been used for a while and perhaps is a bit worn. Strong winds can also move the hoses and cause entanglement. If the hoses are entangled, they can be difficult to pull out from the dispenser, causing unnecessary wear and tear of the hose, thus shortening the lifetime of the hose.

Another problem with hoses that hangs from the top part of the fuel dispenser column, is that the hose, when lightly twisted in any way or moved by the wind, can hang in front of other parts of the fuel dispenser, as e.g. information signs, key sets, displays, the hose nozzle handle etc. If the hose is in the way of important information, it can lead to important information not being visible. If the hose is in the way of other parts as the key set and display or e.g. a button for choosing fuel type or the hose nozzle, the hose has to be moved to use those attributes, causing a bad customer experience and reducing the fuel dispenser usability.

A magnetic holder for gasoline filing spout caps is disclosed in US-A-2 702 683.

### Summary of the invention

It is an object of the present invention to provide an improvement of the prior art. More particularly, it is an object of the present invention to provide a more efficient and user-friendly fuel dispensing unit. Further, it is an object of the present invention to provide method for handling at least one hose at a fuel dispensing unit.

These and other objects as well as advantages that will be apparent from the following description of the present invention are achieved by a fuel dispensing unit and a method for handling at least one hose according to the independent claims.

Thus, a fuel dispensing unit is provided for refueling vehicles, comprising at least one hose. The fuel dispensing unit comprises a first magnetic element attached to said fuel dispensing unit, and a second magnetic element attached to said hose. The fuel dispensing unit is characterised in that said magnetic elements are adapted to releasably attach said hose to the fuel dispensing unit when said hose is in an idle position. This is advantageous in that the at least one hose will be reliably attached to the fuel dispensing unit when not in use, thereby avoiding entanglement with an additional hose or other equipment. Also, the risk of the at least one hose blocking advertising or important information provided on the fuel dispensing unit is eliminated.

The first magnetic element attached to said fuel dispensing unit may extend in a vertical direction, which is advantageous in that it will be hidden and protected by the hose when the hose is in its idle position. Also, this area of the fuel dispensing unit is normally plain and available, thereby creating a suitable space for the first magnetic element.

The second magnetic element attached to said hose may extend in the longitudinal direction of the hose, which is advantageous in that it will be at least partly hidden and protected by the hose when the hose is in its idle position. Also, this area of the hose is plain and available, thereby creating a suitable space for the second magnetic element.

The first and second magnetic elements may be adapted to attach said hose to the fuel dispensing unit when said hose is in an idle position and adapted to be released from each other when said hose is in an operating position. Accordingly, when pulling the hose from its idle position in the fuel dispensing unit, the first and second magnetic element starts to gradually detach from each other, allowing the hose to be pulled into its operating position.

The fuel dispensing unit may further comprise a guide rail to accommodate said hose. This is advantageous in that entanglement with an additional hose or other equipment will be further avoided. Also, it creates a smooth and aesthetically attracting fuel dispensing unit.

The first magnetic element may be attached to the guide rail, which is advantageous in that it will be protected by the guide rail even though the hose is in its operating position.

The first and/or second magnetic element may comprise several sub elements. As an example hereof may be mentioned a magnetic element in the form of a strip divided into several shorter sub elements. In this way, the magnetic elements may be adapted to different shapes and forms of a fuel dispensing unit.

The first and/or second magnetic element may comprise a strip, which is an easy and cost efficient solution.

The second magnetic element may surround said hose, which makes the hose easy to attach to the fuel dispensing unit (since a substantial magnetic field is created around said hose).

According to a second aspect of the present invention, the invention relates to a method for handling least one hose at a fuel dispensing unit. The method comprises attaching a first magnetic element to said fuel dispensing unit, and attaching a second magnetic element to said hose. The method is characterised in that said magnetic elements releasably attach said hose to the fuel dispensing unit when said hose is in an idle position. This is advantageous in that the at least one hose will be reliably attached to the fuel dispensing unit when not in use, thereby avoiding entanglement with an additional hose or other equipment. Also, the risk of the at least one hose blocking advertising or important information provided on the fuel dispensing unit is eliminated.

Generally, all terms used in the claims are to be interpreted according to their ordinary meaning in the technical field, unless explicitly defined otherwise herein. All references to "a/an/the [element, device, component, means, etc]" are to be interpreted openly as referring to at least one instance of said element, device, component, means, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a perspective view of an fuel dispensing unit according to prior art,
Fig. 2a is a perspective view of a side wall of a fuel dispensing unit according to the first aspect of the invention carrying two hoses, when said hoses are in their idle position,
Fig. 2b is a perspective view of a side wall of a fuel dispensing unit according to the first aspect of the invention carrying two hoses, when said hoses are in their operating position,
Fig. 3 is a cross sectional top view of a side wall of a fuel dispensing unit according to the first aspect of the invention carrying two hoses.

### Detailed description of preferred embodiments of the invention

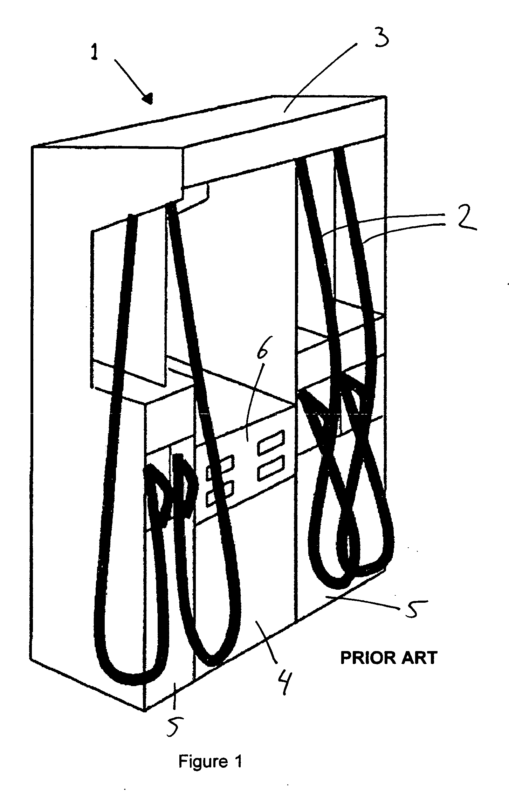

Fig. 1 illustrates an exemplary fuel dispensing unit 1 according to prior art, having hoses 2 hanging from the top part 3 of the fuel dispenser unit 1. The fuel dispenser unit 1 further comprises a pump unit 4, two columns 5, a payment terminal 6. The columns 5 contain storage spaces (not shown) for the hoses 2, which hoses 2 are possible to pull out via guiding means (not shown) positioned under the top part 3 of the columns 5.

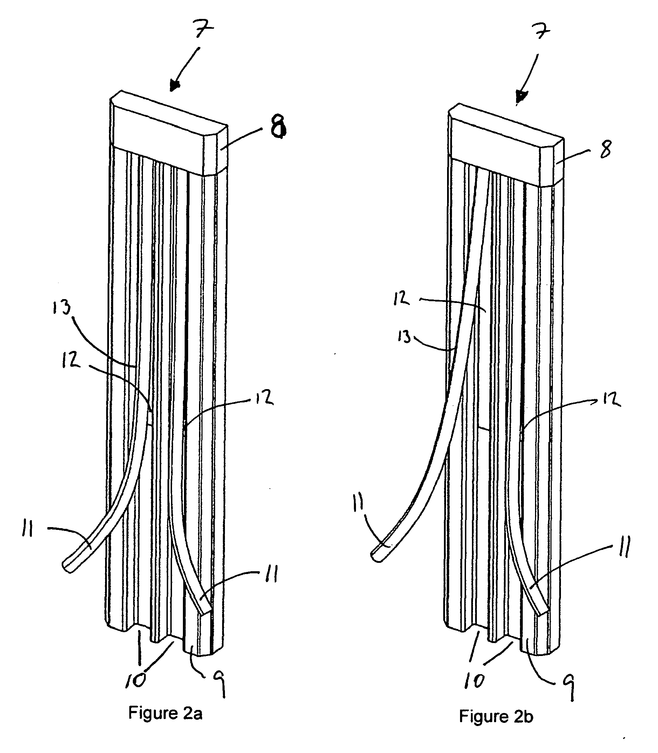

In Fig. 2a, a side wall 7 of a fuel dispensing unit 1 according to a first aspect of the present invention is illustrated. The side wall 7 has an upper portion 8 and a bottom portion 9, and two guide rails 10 extending between said upper and lower portions 8, 9. Two hoses 11 are attached to the upper portion 8 of the side wall 7. Further, first magnetic elements 12 are attached to the side wall 7 along the guide rails 10 in a vertical direction, and second magnetic elements 13 are attached to the part of the hoses 11 facing the side wall 7 in the longitudinal direction of each hose 11.

Fig. 2b illustrates the same side wall 7 as in Fig. 2a, with one of the hoses 11 partly pulled out from its idle position.

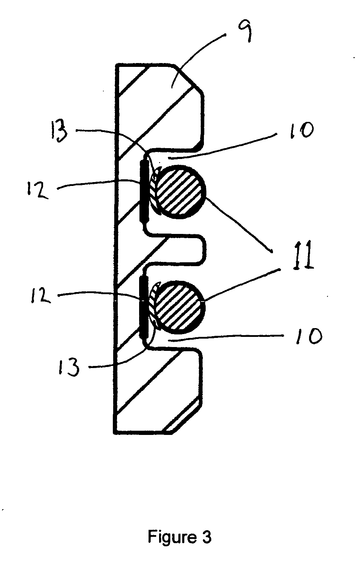

In Fig. 3, a top view of the side wall 7 of the fuel dispensing unit 1 is illustrated.

When a user of the fuel dispensing 1 unit pulls the hose 11, the pulling force will cause the first magnetic element 12 attached to said fuel dispensing unit 1 and second magnetic element 13 attached to said hose 11 to gradually detach from each other, allowing the hose 11 to be pulled into its operating position. The pulling force will eventually make the maximum length of the hose 11 available to the user when in an operating position.

When the user releases the pulling force on the hose 11, the first magnetic element 12 and the second magnetic element 13 will attract each other and gradually attach said hose to the fuel dispensing unit 1, back to its idle position.

The size and shape of the guide rails 10 may of course be varied, as well as their extension along the fuel dispensing unit 1.

The first and second magnetic elements 12, 13 may of course be of any size and shape, and extend in any direction. Also, the material may be varied. In one embodiement, one of the first and the second magnetic element 12, 13 is a magnet and the other one is made of a magnetic material, such as metal. In a further embodiement of the invention, the second magnetic element 13 is embedded within said hose 11, or its surrounding wall.

The first magnetic element 12 attached to said fuel dispensing 1 unit may also extend in a horizontal direction in the upper part of the fuel dispensing unit 1 in order to attach a part of the hose horizontally to said fuel dispensing unit 1.

According to a second aspect of the invetion a method is provided for handling at least one hose 11 at a fuel dispensing unit 1.

The invention has mainly been described above with reference to a few embodiments. However, as is readily appreciated by a person skilled in the art, other embodiments than the ones disclosed above are equally possible within the scope of the inventions, as defined by the appended claims.

## Claims

1. A fuel dispensing unit (1) for refueling vehicles, comprising at least one hose (11),
a first magnetic element (12) attached to said fuel dispensing unit (1), and
a second magnetic element (13) attached to said hose (11),
**characterised in that** said magnetic elements (12, 13) are adapted to releasably attach said hose (11) to the fuel dispensing unit (1) when said hose (11) is in an idle position.

2. A fuel dispensing unit (1) according to claim 1, wherein
said first magnetic element (12) attached to said fuel dispensing unit (1) extends in a vertical direction.

3. A fuel dispensing unit (1) according to claims 1 or 2, wherein
said second magnetic element (13) attached to said hose (11) extends in the longitudinal direction of the hose (11).

4. A fuel dispensing unit (1) according to any one of the preceding claims, wherein said first and second magnetic elements (12, 13) are adapted to be released from each other when said hose (11) is in an operating position.

5. A fuel dispensing unit (1) according to any one of the preceding claims, further comprising a guide rail (10) to accommodate said hose (11).

6. A fuel dispensing unit (1) according to claim 6, wherein said first magnetic element (12) is attached to the guide rail (10).

7. A fuel dispensing unit (1) according to any one of the preceding claims, wherein said first and/or second magnetic element (12, 13) comprises several sub elements.

8. A fuel dispensing unit (1) according to any one of the preceding claims, wherein said first and/or second magnetic element (12, 13) comprises a strip.

9. A fuel dispensing unit (1) according to any one of the claims 1-8, wherein said second magnetic element (13) surrounds said hose.

10. A method for handling at least one hose at a fuel dispensing unit, comprising
attaching a first magnetic element (12) to said fuel dispensing unit, and
attaching a second magnetic element (13) to said hose (11),
**characterised in that** said magnetic elements (12, 13) releasably attach said hose (11) to the fuel dispensing unit when said hose (11) is in an idle position.

## Patentansprüche

1. Kraftstoff-Abgabeeinheit (1) zum Auftanken von Fahrzeugen, die Folgendes umfasst:
wenigstens einen Schlauch (11),
ein erstes magnetisches Element (12), das an der Kraftstoff-Abgabeeinheit (1) befestigt ist, und
ein zweites magnetisches Element (13), das an dem Schlauch (11) befestigt ist,
**dadurch gekennzeichnet, dass** die magnetischen Elemente (12, 13) dafür eingerichtet sind, den Schlauch (11) lösbar an der Kraftstoff-Abgabeeinheit (1) zu befestigen, wenn sich der Schlauch (11) in einer Ruhestellung befindet.

2. Kraftstoff-Abgabeeinheit (1) nach Anspruch 1, wobei sich das erste magnetische Element (12), das an der Kraftstoff-Abgabeeinheit (1) befestigt ist, in einer vertikalen Richtung erstreckt.

3. Kraftstoff-Abgabeeinheit (1) nach Anspruch 1 oder 2, wobei sich das zweite magnetische Element (13), das an dem Schlauch (11) befestigt ist, in der Längsrichtung des Schlauchs (11) erstreckt.

4. Kraftstoff-Abgabeeinheit (1) nach einem der vorhergehenden Ansprüche, wobei das erste und das zweite magnetische Element (12, 13), dafür eingerichtet sind, voneinander gelöst zu werden, wenn sich der Schlauch (11) in einer Betriebsstellung befindet.

5. Kraftstoff-Abgabeeinheit (1) nach einem der vorhergehenden Ansprüche, die ferner eine Führungsschiene (10) umfasst, um den Schlauch (11) aufzunehmen.

6. Kraftstoff-Abgabeeinheit (1) nach Anspruch 5, wobei das erste magnetische Element (12) an der Führungsschiene (10) befestigt ist.

7. Kraftstoff-Abgabeeinheit (1) nach einem der vorhergehenden Ansprüche, wobei das erste und/oder das zweite magnetische Element (12, 13) verschiedene Unterelemente umfasst/umfassen.

8. Kraftstoff-Abgabeeinheit (1) nach einem der vorhergehenden Ansprüche, wobei das erste und/oder das zweite magnetische Element (12, 13) einen Streifen umfasst/umfassen.

9. Kraftstoff-Abgabeeinheit (1) nach einem der Ansprüche 1 bis 8, wobei das zweite magnetische Element (13) den Schlauch umschließt.

10. Verfahren zum Handhaben wenigstens eines Schlauchs an einer Kraftstoffabgabe-Einheit, das Folgendes umfasst:
das Befestigen eines ersten magnetischen Elements (12) an der Kraftstoff-Abgabeeinheit (1) und
das Befestigen eines zweiten magnetischen Elements (13) an dem Schlauch (11),
**dadurch gekennzeichnet, dass** die magnetischen Elemente (12, 13) den Schlauch (11) lösbar an der Kraftstoff-Abgabeeinheit (1) befestigen, wenn sich der Schlauch (11) in einer Ruhestellung befindet.

## Revendications

1. Unité de distribution de carburant (1) pour ravitailler en carburant des véhicules, comprenant au moins un tuyau flexible (11),
un premier élément magnétique (12) fixé à ladite unité de distribution de carburant (1), et
un second élément magnétique (13) fixé audit tuyau flexible (11), **caractérisée en ce que** lesdits éléments magnétiques (12, 13) sont adaptés afin de fixer de manière amovible le tuyau flexible (11) à l'unité de distribution de carburant (1) quand ledit tuyau flexible (11) est dans une position de ralenti.

2. Unité de distribution de carburant (1) selon la revendication 1, dans laquelle ledit premier élément magnétique (12) fixé à ladite unité de distribution de carburant (1) s'étend dans une direction verticale.

3. Unité de distribution de carburant (1) selon les revendications 1 ou 2, dans laquelle ledit second élément magnétique (13) fixé audit tuyau flexible (11) s'étend dans la direction longitudinale du tuyau flexible (11).

4. Unité de distribution de carburant (1) selon une quelconque des revendications précédentes, dans laquelle lesdits premier et second éléments magnétiques (12, 13) sont adaptés afin d'être relâchés l'un de l'autre quand ledit tuyau flexible (11) est dans une position de fonctionnement.

5. Unité de distribution de carburant (1) selon une quelconque des revendications précédentes, comprenant en outre un rail de guidage (10) pour renfermer ledit tuyau flexible (11).

6. Unité de distribution de carburant (1) selon la revendication 5, dans laquelle ledit premier élément magnétique (12) est fixé au rail de guidage (10).

7. Unité de distribution de carburant (1) selon une quelconque des revendications précédentes, dans laquelle ledit premier et/ou second élément magnétique (12, 13) comprend plusieurs sous-éléments.

8. Unité de distribution de carburant (1) selon une quelconque des revendications précédentes, dans laquelle ledit premier et/ou second élément magnétique (12, 13) comprend un ruban.

9. Unité de distribution de carburant (1) selon une quelconque des revendications 1 à 8, dans laquelle ledit second élément magnétique (13) entoure ledit tuyau flexible.

10. Procédé de manipulation d'au moins un tuyau flexible au niveau d'une unité de distribution de carburant, comprenant de:
fixer un premier élément magnétique (12) à ladite unité de distribution de carburant, et
fixer un second élément magnétique (13) audit tuyau flexible (11), **caractérisé en ce que** lesdits éléments magnétiques (12, 13) fixent de manière amovible ledit tuyau flexible (11) à l'unité de distribution de carburant quand ledit tuyau flexible (11) est dans une position de ralenti.
